# EUROPEAN PATENT SPECIFICATION

(11) **EP 0 386 944 B1**
(45) Date of publication and mention of the grant of the patent: **24.05.1995**
(21) Application number: 90302196.2
(22) Date of filing: 01.03.1990
(51) Int. Cl.: C03B 11/08, C03C 3/105

(54) **Molding apparatus and method**
Formvorrichtung und Verfahren
Moule et procédé

(30) Priority: 08.03.1989 US 320754; 08.03.1989 US 320459; 08.03.1989 US 320693; 08.03.1989 US 320753
(43) Date of publication of application: 12.09.1990
(73) Proprietor: Corning Incorporated, Corning New York 14831 (US)
(72) Inventor: Carpenter, Larry Leo, Painted Post, New York 14870 (US); Hagerty, Robert James, Painted Post, New York 14870 (US); Maschmeyer, Richard Orr, Corning, New York 14830 (US); Morrell, Mark Leon, Horseheads, New York 14845 (US); Schrauth, Peter Amandus, Elmira, New York 14901 (US)
(74) Representative: Kyle, Diana

(56) References cited:
- US-A- 4 734 118
- US-A- 4 778 505
- PATENT ABSTRACTS OF JAPAN, unexamined applications, C field, vol. 12, no. 242,July 8, 1988 THE PATENT OFFICE JAPANESE GOVERNMENT page 155 C 510

## Description

The present invention relates to a method and apparatus for molding glass optical elements as well as a method and apparatus for making glass molds suitable for making such glass optical elements.

Manufacture of optical lens elements has long involved complex, slow, expensive and tedious procedures. Although concerted efforts to improve existing methods and apparatus of manufacture have been undertaken, prior art methods still have many disadvantages and problems.

Precision optical elements require polished surfaces of exacting figure and surface quality. The surfaces demand fabrication in proper geometric relation to each other and, where the elements are used in transmission applications, they will be prepared from a material of controlled, uniform, and isotropic refractive index. For some applications non-isotropic refractive index materials have been known.

Precision optical elements of glass are customarily produced by means of one of two complex, multi-step processes. In one process, a glass batch is melted in a conventional manner and the melt formed into a glass body having a controlled and homogeneous refractive index. Thereafter, the body may be reformed utilizing well-known repressing techniques to yield a shape approximating that of the desired final article. The surface figure and finish of such an intermediate product are not suitable for image forming optics. The intermediate article is fine annealed to develop the proper refractive index, and the surface figure thereof is improved by means of conventional grinding practices. Another method involves forming a glass melt into a bulk body which is promptly fine annealed and subsequently cut and ground to articles of a desired configuration.

Both of the preceding processes have similar limitations. The surface profiles that are produced through grinding are normally restricted to conic sections, such as flats, spheres, and parabolas. It should be understood that other shapes, in particular, general aspheric surfaces are difficult to grind. In both processes, the ground optical surfaces are polished employing conventional, but complicated polishing techniques which are intended to improve surface finish without compromising the surface figure. In the case of the aspheric surfaces, such polishing requires highly skilled and very expensive hand-working. A final finishing operation, such as, for example, edging is also commonly required. Edging ensures that the optical and mechanical axes of a spherical lens coincide. Edging, however, does not improve the relationship of misaligned aspheric surfaces, if such are present, which factor accounts, at least in part, for the difficulty experienced in grinding such lenses with precision.

Direct molding of lenses to a finished state could, at least in principle, eliminate the grinding, polishing and edging operations, which are especially difficult and time consuming for aspheric lenses. Such molding processes are employed for fabricating plastic lenses. However, existing plastics suitable for optical applications are available in a limited refractive index and dispersion range. In addition, many plastics scratch easily, display birefringence and are prone to the development of yellowing and haze. Abrasion resistant and anti-reflective coatings have been used but have failed to fully solve these problems with plastics. Further, plastic optical elements are subject to distortion from mechanical forces, humidity, and heat. Both the volume and refractive index of plastics vary substantially with variations in temperature thereby limiting the temperature interval over which plastics are useful.

The properties of glass render it generally superior to plastic for optical applications. Conventional hot pressing of glass, however, does not provide the exacting surface figures and surface qualities demanded for image forming optics. The presence of chill wrinkles in the surface and surface figure deviations are chronic problems. Similar problems can be encountered in conventional repressing techniques as noted above.

Numerous means and devices have been employed to correct the shortcomings of conventional hot glass pressing processes and apparatuses. Among these are special pressing apparatuses utilizing isothermal pressing, i.e., pressing using heated molds and preheated glass so that the temperatures under which the pressing step is carried out vary only slightly across the glass preform during the pressing interval, and using a gaseous environment inert to the glass and mold materials during the pressing operation. In addition, special materials to construct the molds, special glass compositions and molding process parameters have been developed and used in an effort to improve the quality of lenses as well as other optical elements which are directly pressed.

Various patents related to mold and glass manufacture are noted and described below, and all of these patents are hereby expressly incorporated herein by reference. U.S. Patent No. 2,410,616 describes an early apparatus and method for molding glass lenses. The molds are capable of being heated and the temperatures thereof controlled within narrow ranges compatible which the glasses being molded. An inert or reducing gas environment, preferably hydrogen, is used in contact with the mold surfaces to inhibit oxidation thereof. A flame curtain, normally burning hydrogen, over the opening of a chamber enclosing the molds to prevent the entrance of air thereinto is described.

U.S. Patent No. 3,833,347 is similarly directed to an apparatus and method for press molding glass lenses. The molds can be heated and the temperature controlled. An inert gas surrounds the molds to preclude oxidation. This patent discloses the use of mold surfaces composed of glass-like carbon which are distinguished from metal dies that were stated to produce lens surfaces not suitable for photographic applications. The method described comprises eight steps including placing a chunk of glass into a mold, evacuating the chamber surrounding the mold and introducing a gas therein, raising the mold temperature to about the softening point of the glass, applying a load to the mold to shape the glass, reducing the temperature of the mold to below the transformation temperature of the glass while maintaining the load on the mold to prevent distortion of the shaped glass body, removing the load, cooling the mold to about 300°C to inhibit oxidation of the glass-like carbon, and lastly opening the mold. This patent asserted that lenses so produced were essentially strain-free without the need for further annealing.

A similar teaching of an apparatus and method for transfer molding glass lenses employing glass-like carbon surfaces on the mold is found in U.S. Patent No. 3,844,755. The use of mold coatings to enhance the surface quality of the pressings, to improve mold durability, and act as a parting agent from the molten glass is suggested in U.S. Patent No. 3,244,497. This patent describes a lens blank molding apparatus wherein a temperature controlled plunger and an insulated mold base offering controllable heat transfer to a supporting press table are described. The apparatus, however, is designed for pressing relatively thin lens blanks, which factor is an important contributor to the temperature control attainable with the apparatus.

U.S. Patent No. 4,481,023 describes an alternative molding apparatus for direct pressing of lenses of optical quality. Temperature control of the molding surfaces is also provided, and the apparatus is designed for pressing at relatively high glass viscosities of 10⁸-10¹² poises. This corresponds to a relatively low pressing temperature, which helps to reduce difficulties stemming from non-uniform heat flow.

U.S Patent No. 3,244,497, supra, teaches refractory coating selected from the group consisting of refractory nitrides, borides, carbides, and oxides. Coatings no thicker than approximately half of the wavelength of visible light, e.g. 0.5 microns, are suggested in order that the coating faithfully reproduce the mirror finish of the underlying mold surface.

U.S. Patent NO. 3,900,328 generally describes molding glass lenses utilizing molds fabricated from glass-like carbon. This reference discloses placing a portion of heat softened glass into a cavity of a mold prepared from glass-like carbon, applying appropriate amounts of heat and pressure to the mold while maintaining a non-oxidizing atmosphere in the vicinity of the mold, cooling and opening the mold, and then removing the finished lens from the mold.

U.S. Patent No. 4,168,961 describes a method for precision molding of optical glass elements wherein a mold having mold surfaces of a silicone carbide/glassy carbon mixture is taught. The patent suggests that elements molded employing such mold material exhibit high surface quality and surface accuracy. However, molding while maintaining a controlled atmosphere is required to avoid oxidation of this material, a condition which substantially reduces the practical economical value of the method.

Press forming optical lenses from hydrated glass is taught in U.S. Patent No. 4,073,654. The process involves placing granules of hydrated glass into a mold, drawing a vacuum on the mold, heating the mold to a sufficiently high temperature to sinter the granules while the mold is sealed to prevent escape of water vapor therefrom, applying a load to the mold, releasing the load from the mold, and opening the mold. Glass-like carbon, tungsten carbide, and alloys of tungsten are suggested mold materials.

European patent application No. 19342 discloses isothermal pressing of glass lenses at temperatures above the softening points of the glasses employed, i.e. at temperatures where the glasses exhibit viscosities of less than 10^{7.6} poises.

U.S. Patent No. 4,139,677 teaches precision molding of optical glass elements in a mold having molding surfaces formed of silicon carbide or silicon nitride. This method allegedly provides good surface quality and configuration, however, it requires maintaining an oxygen-free atmosphere within the molding chamber to avoid oxidation of the mold coatings.

U.S. Patent No. 4,747,864 describes glass optical elements formed by a direct molding process at glass viscosities in the range of 10⁸-10¹² poises. Selected moldable alkali aluminofluorophosphate optical glasses are pressed to an optical surface finish in air utilizing an optically smooth titanium nitride molding surface, the surface being provided, for example, as a surface coating on a stainless steel mold or on a nickel chromium alloy mold supporting an electroless nickel base coating.

U.S. Patent 4,734,118 describes a mold for pressing a glass preform which has an overall geometry similar to the desired final lens. The top and bottom mold dies having mold cavities which match the configuration of the final lens. A glass preform is heated to the molding temperature while the mold parts are separately heated. The mold parts are brought together against a ring having a thickness which governs the thickness of the lens to be molded. The volume of glass that is put into the molding cavity is controlled by measuring its mass. The reference teaches a variety of mold surface materials such as 400 series stainless steels, electroless nickel, beryllium nickel alloys, tungsten carbide, alloys of noble metals such as platinum, rhodium and gold and fused silica. The patent teaches that the mold material itself is not critical but must be capable of accepting a good surface finish.

In order to realize the economic advantages of employing direct molding techniques for products such as aspheric lenses, factors relating to the service life of the molds employed for the pressing operation are most significant and must be taken into strict account. The machining of aspheric shapes in molds renders the molds relatively expensive, particularly since very hard and durable mold materials are generally required. This is especially true for molding processes involving low-temperature, high-viscosity molding, since higher molding stresses are involved.

It is an object of the present invention to provide method and apparatus for making economically optical elements with accurate surface configurations and finishes.

Another object is to provide method and apparatus for making economically precision optical elements with small radii of curvatures, for instance aspherical lenses, with accurate surface configuration and finish.

Briefly, according to the present invention, a pair of glass molds defining first and second opposed optical molding surfaces are formed as follows. A first master defining a first master cavity adapted to form a first glass mold is provided within which cavity a quantity of glass mold material is disposed. The first glass mold is then molded having a first glass molding surface adapted to form a first optical surface. The process is repeated with a second master so as to form a second glass mold having a second glass molding surface adapted to form a second optical surface.

The first and second glass molds thus formed are disposed within constraining means in an opposed operative relationship such that the first and second glass molding surfaces, at least in part, define a glass mold cavity having a predetermined volume, size and shape. A predetermined quantity of glass optical element material is disposed within the glass mold cavity thus formed, and a glass optical element having first and second optical surfaces is molded.

Precision inserts or rings having predetermined desired physical characteristics may be employed in connection with defining the cavities for forming the first and second glass molds as well as the glass mold cavity. Similarly, a master sleeve and a glass optical element sleeve are employed as constraining means to define the cavities.

To facilitate the formation of the glass molds, shaped and polished elements or slugs are formed from which the first and second glass molds are molded. Similarly, shaped and polished preforms are formed, such as, for example, spherical balls, from which the optical glass elements are molded.

One glass mold formed in accordance with this invention and used for molding in connection with another mold formed of metal, glass ceramic or the like is also contemplated by this invention, as is the molding of non-glass optical elements or lenses.

These and additional objects, features and advantages of the present invention will become apparent to those skilled in the art from the following detailed description and the accompanying drawing, which is incorporated in and constitutes part of the present specification, on which, by way of example, only the preferred embodiments of this invention are illustrated.
Figure 1 is a cross-sectional elevation of an apparatus illustrating the method of forming a glass mold in accordance with the present invention.
Figure 2 is an front elevation of a slug or preform suitable for forming one of the glass molds of the present invention.
Figure 3 is a cross-sectional view of one of the glass molds formed in accordance with the present invention.
Figure 4 is a front elevation of another slug or preform suitable for forming a glass mold in accordance with the present invention.
Figure 5 is a cross-sectional elevation of another glass mold formed in accordance with the present invention.
Figure 6 is a cross-sectional elevation of an apparatus illustrating the method of forming a glass optical element illustrating a method in accordance with the present invention.
Figure 7 is a cross-sectional view of a molded glass optical element in accordance with the present invention.

It is to be noted that the drawings are illustrative and symbolic of the present invention, and there is no intention to indicate scale or relative proportions of the various elements shown therein.

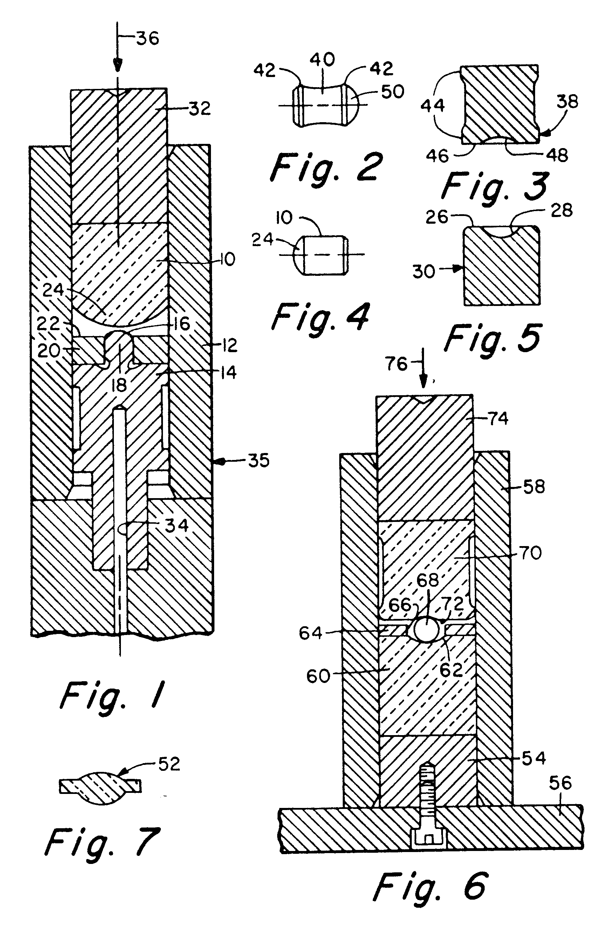

Referring to Figure 1, there is shown a slug or preform 10 disposed within master sleeve 12. In opposing cooperative relationship with slug 10 is master or mold element 14. Examples of materials suitable for forming master 14 are Inconel 718, stainless steel type 420, tungsten carbide, and the like.

The molding or optical surface of the master may degrade in use through chemical attack, corrosion, denting, abrasion, adherence of the material to be molded, or the like. To minimize such degradation, the master surfaces may be coated or plated. Suitable coating and plating materials are electroless nickel (ElNi) for Inconel 718 and type 420 stainless steel, and gold for tungsten carbide. Other possible coating and plating materials are hafnium, nitride, boron carbide, and amorphous diamond.

Referring again to Figure 1, master 14 is shown formed with a snout 18 which protrudes or extends outwardly from master 14, and has a desired optical prescription on its surface 16 when used to form molds for optical elements or lenses. A master ring 20 is disposed over and about snout 18 of the master in a manner so as to form the peripheral portion of the mold surface as will be hereinafter described in more detail. The material of master ring 20 is preferably tungsten carbide but may also be MACOR^{(R}) glass ceramic or stainless steel.

Lens design data is used to calculate the profile of surface 16 of master 14. The profile compensates for the different coefficients of thermal expansion of the lens and mold materials at the forming temperature to generate the required mold figure.

To design the profile of the master, it is necessary to start with the parameters of the ultimate optical element or lens to be formed. For purposes of this description, reference will be made to the molding of a lens although this invention is not so limited. The specific material, size, shape, geometric configuration and the like of the lens must first be defined. At least in part, these will depend on the ultimate utility of the lens.

The size and shape of the lens at its forming or molding temperature is first calculated taking the temperature coefficient of expansion and other relevant parameters of the lens and lens material into account. This provides the size and shape of the mold cavities and lens mold ring at the lens forming or molding temperature. The mold cavities and mold ring will be hereinafter described in more detail.

The size and shape of the molds, mold ring and sleeve at room temperature (20 degrees C.) is then computed from the size and shape data at forming or molding temperature as well as the relevant material or composition parameters. As will be understood by one familiar with the art, the preceding process is then repeated, as relevant, to determine the master, master ring and master sleeve size and shape at both the forming temperature and room temperature.

Usually, two molds and a lens ring are used for molding the lens. Each mold forms one lens optical surface and the peripheral flat, while the ring forms the lens barrel or the outer peripheral shape and size of the lens. As will be understood, some lenses do not require a lens flat and some lenses may be molded without a ring.

One reason for forming a two piece master, snout and master ring, is to obtain a very small blend radius on the ultimate lens. The blend radius is the radius between the curved optical portion of the lens and the peripheral flat portion. For many applications the required blend radius is smaller that the tool radius that would be used to form it. Metal cutting tools having a diamond point with a 0.76 mm (0.030") radius work well but tools with smaller radii are expensive, unreliable, and do not have a long life. Therefore, to facilitate a more precision mold design and a small blend radius, a two piece master design is preferred. It is to be understood that when a larger blend radius may be used or such a design is otherwise desirable, the master and ring may be fabricated in one piece.

The optical cavity master shape is formed on surface 16 of snout 18 of master 14. Such surface must be fabricated with precision and is preferably formed by the single point diamond turning process (SPDT). This process is defined as using a single point on a diamond cutting tool mounted in a precision lathe to machine the surface. An example of a suitable lathe is an aspheric generator manufactured by Moore Special Tool Co.

Maintaining close dimensional tolerances on the ring thickness and snout height, such as for example plus or minus 50 millionths of an inch, allows the ultimate mold cavity and mold flat to be precisely oriented producing a relatively sharp corner as the blend radius. A clearance of approximately 0.025 mm (0.001") is typically allowed between the outside snout diameter and the master ring inside diameter for acceptable operation. Of course, it will be understood that the tolerances described above are only typical and may be varied depending on the materials and temperatures involved, the precision of the lens desired and the utility of the lens.

Slug or preform 10 is formed with a predetermined convex surface or bump 24 as is additionally shown in Figure 4. Bump 24 is disposed in opposing relationship with surface 16 of snout 18. Surface 16 of snout 18 together with surface 22 of master ring 20 combine to form the upper mold surface 26 including concave surface 28 of glass mold 30 as shown additionally in Figure 5. Although surface 22 is variously described herein as flat or otherwise, it will be understood that it may contain alignment or orientation marks and the like.

After slug or preform 10 is disposed in opposing relationship to surfaces 16 and 22 of snout 18 and master ring 20 respectively within sleeve 12, pushrod 32 is brought into position within sleeve 12 in operative association with slug 10. A thermocouple, not shown, may be inserted into aperture 34 of master 14 as shown in Figure 1 for measuring temperature of master 14.

After apparatus 35 is thus assembled in a press, not shown, it is ready to be heated by any suitable means. The means of applying pressure in the press is not critical and need only have a mounting means and a ram rod, and a pneumatic or hydraulic cylinder capable of exerting a pressure sufficient to mold the particular molding composition at its molding temperature. The mold assembly and the mold material may be heated by any suitable means preferably by an RF induction field well know in the art. Such induction heating is preferred because the master sleeve is a good susceptor, RF generators are readily available commercially, and good temperature control may be maintained. Heating and pressing may be performed in a controlled inert atmosphere, such as a nitrogen glove box, to eliminate dirt, contaminants, and oxidation of the tooling, if desired.

The material for slugs 10 and 40 is not critical and the slugs may be formed of any suitable material depending on the ultimate material to be molded, the temperatures involved, chemical compatibility and the like. One familiar with the art can select a suitable material for a particular application.

For forming a mold for the lens example described herein, a glass composition known as Schott F6 manufactured by Schott-Ruhrglas Gmbh of West Germany is suitable. This composition is about as follows on an average weight percent: SiO₂ 42.7, PbO 46.8, BaO 2.5, Al₂O₃ 0.1, K₂O 5.4, Na₂O 2.5. This glass has an annealing point of about 425 °C., a strain point of about 387 °C., a nominal softening point of about 591 °C., and a coefficient of thermal expansion of about 9 ppm/deg. (100-300 °C.).

The following is an example of a typical mold forming procedure using the Schott F6 glass described herein. The temperature of the molding apparatus 35 with slug 10 in place as hereinabove described is raised to a soaking temperature of 510 °C. by means of an RF induction field. The assembly is soaked at 510 °C for about three minutes or until a thermal equilibrium of the assembly is reached. Thermal equilibrium is defined as a condition where the temperature variation across the slug is not more than about 1 degree C.

Thereafter, a force is applied to pushrod 32 as shown by arrow 36. As will be well understood, pressure may be applied by means of a hydraulic cylinder press as described above. The force produced by the cylinder is raised from about 48 lbs. to 148 lbs. in about 100 seconds, and the force is maintained for about 7 minutes while the assembly is maintained at about 510°C. Thereafter, the force is removed and the assembly is allowed to cool to about 400°C., that is a temperature at which the mold material sets up.

The assembly is then further free cooled to about 150°C and the finished glass mold, such as that illustrated by reference numeral 30 of Figure 5, is removed from the mold assembly. A slug such as 10 of Figure 4 having a generally cylindrical shape with straight sidewalls is well suited for the lower or stationary mold as will be hereinafter described in more detail.

The upper or movable mold 38, as illustrated in Figure 3, may be formed from a slug 40 having a reduced diameter between shoulders 42 to ultimately result in a glass mold 38 having raised bands 44 as shown in Figure 3. These bands simulate the bearing bands on standard piston molds and reduce the tendency for mold sticking during subsequent optical element pressing due to slight irregularities and/or dirt in the molding sleeve. Otherwise, glass mold 38, having mold surface 46 and concave surface 48, is formed from slug 40 having bump 50 in the manner described hereinabove in connection with the formation of glass mold 30.

Although the formation of the glass molds has been described in terms of forming a pair of glass molds to be used in a cooperative relationship, it is contemplated that only one glass mold may be formed as described herein and disposed in an operative relationship, to form a molding cavity, with a mold formed by other means and made of metal, glass ceramic and the like, if and when desired. As will be understood, in such an embodiment, the advantages of employing a molded glass mold as described herein will be available only on one optical surface of the ultimate optical element formed, however, depending on the optical element and the use to which it will be placed, that may be satisfactory.

The glass molds thus formed are annealed to relieve residual stresses. Such annealing may be done using equipment and procedures known in the art, and which varies with the composition of the materials being annealed. However, care must be taken to carefully control the annealing process thereby controlling the amount of mold shrinkage in a determinable manner as well as setting the fictive temperature.

An example of annealing the molds of the present lens example is as follows. The glass molds are placed in an annealing oven manufactured by the Blue M Electric Co. of Blue Island, IL., and the temperature is raised at a rate of about 11 C. degrees per minute until the annealing temperature of 430 °C. is reached. That temperature is then maintained for about 30 minutes. The important cooling rate employed is about -0.6 C. degrees per minute until a temperature of about 367 °C. is reached. This is then followed by cooling at a rate of about -2 C. degrees per minute until a temperature of about 317 °C. is reached. Thereafter the molds are force cooled to room temperature. The Blue M annealing oven may be programmed for the annealing cycle.

Other examples of glass compositions suitable for glass mold forming are Corning Glass Works glass composition codes 9012, 0120, and 8355. It must be understood that selection of a suitable glass mold composition depends on many variables including, importantly, the material to be molded by such molds.

Referring now to Figure 6 there is shown an apparatus for molding a glass optical element such as lens 52 illustrated in Figure 7. The molding apparatus assembly comprises a sleeve post 54 disposed on a base 56. Element sleeve 58 is disposed about sleeve post 54 and the first mold 60 is placed within sleeve 58 adjacent to sleeve post 54. The first molding surface 62, within which the molding configuration is formed, is disposed within sleeve 58 in the direction away from sleeve post 54. An element ring 64 is then disposed within sleeve 58 on the surface of mold 60. As will be understood, the inner opening of ring 64 will define the exterior configuration and size of the glass element to be molded. Inner surface 66 of ring 64 and the exposed portion of first molding surface 62, exposed within the opening in ring 64, define the size and configuration of one side and the periphery of the glass element or lens to be molded.

An element preform 68 is then disposed on the first molding surface 62 within ring 64. A second mold 70 is placed within element sleeve 58 such that the second molding surface 72 thereof comes in contact with element preform 68. As will be understood, the central portion of second molding surface 72 will ultimately form the opposite side of the glass element or lens to be molded.

A pushrod 74 is then disposed over second mold 70 by means of which a force as illustrated by arrow 76 may thereafter be applied. The force is applied to the pushrod of the mold assembly by means of a hydraulic or pneumatic cylinder well known in the art. The force could also be applied by means of dead weight or even through the weight of the mold if time is not important. It should also be understood that the present invention is described in terms of molding one glass lens or optical element but it is contemplated that multiple molding assemblies may be used at one time, wherefore, a means for applying a force to a plurality of molding assemblies simultaneously, such as a hydraulic or pneumatic cylinder with a plurality of arms to contact each molding assembly, can be used.

An lens or element preform 68 is first formed having the required volume of the ultimate lens or glass element to be formed and a surface finish suitable for forming the ultimate glass article. A spherical form for element 68 is preferred for practical and economic reasons since both the surface finish and the required volume may be readily controlled and obtained by conventional machining means which do not form part of this invention and will be readily understood.

A suitable glass composition for forming a glass lens 52 is an alkali aluminofluorophosphate optical glass having a composition as follows on a weight percent basis: P₂O₅ 39.2, Na₂O 5.0, F 4.3, PbO 24.2, BaO 20.1, Li₂O 2.0, and Al₂O₃ 5.2. This composition has a strain point of 330 °C. A typical tolerance on the diameter of a spherical preform is plus or minus 0.008 mm and a typical finish is .LT. 1 microinch AA. Examples of other suitable compositions for forming glass optical elements are examples 10 and 13 of U.S. Patent No. 4,447,550, as well as other SiO₂-B₂O₃-PbO-Al₂O₃-F type glasses. As will be understood, the composition of the ultimate optical element or lens may vary greatly depending on the use to which it may be put and/or the environment in which it is used. Therefore, the composition of the lens or optical element is not critical to and does not form part of the present invention. It will also be understood that the optical element or lens material may be other than glass, as is herein described, and may be a combination of materials or various plastics.

A suitable oven for molding glass optical elements in accordance with the present invention is an ULTRATEMP^{R}, Model IGF 9980-4, manufactured by Blue M Electric Co. of Blue Island, IL.

Typically, the oven is purged with an inert gas, such as nitrogen or argon, prior to use to prevent oxidation of the materials, equipment and apparatus employed. Purging for about 38 minutes with nitrogen at a gas flow of about 9.9-11.3 nm³/h (350-400 scfh) has been found to be useful.

After the molding assembly is disposed in the oven and the oven is purged, the oven heat-up cycle is started. The soaking-pressing temperature of about 375°C is reached in approximately 100 minutes. At the end of this heat-up soaking interval, the pressing cycle starts, typically for about 10-15 minutes, while the pressing temperature is maintained. As will be understood, the pressing temperature depends on the composition of the preform and its physical characteristics, such as the softening point. It will also be understood that the force to be applied by the pneumatic or hydraulic cylinder to the pushrod will vary with the preform material. For the alkali aluminofluorophosphate element preform material described heretofore, the pressing temperature will be 375 °C.

An important consideration in forming the optical element or lens is alignment of the mold parts. Specifically, the mold centerlines should be coincident within predetermined limits for the particular application. Element sleeve 58 maintains the mold parts in alignment. A precision V-block could also be used for this purpose. The inside diameter of the element sleeve as well as all other dimensions are determined in the manner described in connection with the design of the master sleeve hereinabove. The dimensional tolerance between the outside diameter of the mold parts and the inside diameter of the sleeve are important for the desired axial alignment of the mold parts and must be determined for each application as herein described.

The element ring 64 is disposed intermediate molds 60 and 70 and aligned therewith by element sleeve 58. Ring 64 dimensions are determined as described in connection with master ring above taking into account the lens material characteristics and the ultimate lens configuration.

An important aspect of the pressing conditions selected for forming the glass optical element of the present invention is that the element thickness is self-limiting as desired. Having formed the element preform and element ring as herein described, the process is operated in such manner as to produce an element thickness controlled by the resistance of the formed glass optical element to further deformation. That is, at a specific temperature, the pressure used will be opposed by the force required to cause physical deformation in the near final shape of the glass optical element being formed. Since the diameter is constrained by element ring 64, the resultant molded article will have a finite thickness controlled by temperature and pressure. As will be understood, the process may also be operated at temperatures and pressures such that element ring 64 is the controlling factor for the thickness of the optical element being formed.

After pressing is complete, the pressing cylinder is retracted, the oven damper opens automatically, and an 80 minute oven cooling-off period begins. The entire cycle takes approximately 4 hours with the equipment and materials described.

A typical example of forming a glass lens with glass molds is as follows. Two glass molds corresponding to 60 and 70 are provided having a desired molding surface configuration, an outside diameter of 1.52 cm (0.6"), and a length of 1.78 cm (0.7"). Also provided are an element sleeve 58 having an inside diameter of 1.52 cm (0.6"), an outside diameter of 2.03 cm (0.8"), and a length of 5.72 cm (2.25"); an element ring 64 having an inside diameter of 6.4 mm (0.250"), an outside diameter of 1.52 cm (0.6"), and a thickness of 1.57 mm (0.062"); and a spherical preform 68 having a radius of 2.494 plus or minus 0.0024 mm. The dimensional tolerance between the outside diameter of the molds and element ring and the inside diameter of the element sleeve is 0.0025 mm (0.0001").

The glass mold 60, fabricated by the process described earlier from said Schott F6 optical glass, is placed within tungsten carbide sleeve 58. The tungsten carbide element ring 64 is then placed on the surface of glass mold 60. Sleeve 58, glass mold 60 and element ring 64 are then placed over a type 304 stainless steel sleeve post 54 on a tool steel base 56. Spherical element preform 68, formed of the alkali aluminofluorophosphate optical glass described above, having a radius of 2.494 plus or minus 0.008 mm. and mass of 0.2470 plus or minus 0.0024 gm, is placed within the formed element ring 64. A second glass mold 70 is then placed within sleeve 58 in contact with element preform 68. A type 304 stainless steel pushrod 74 is disposed within sleeve 58 adjacent glass mold 70 thus completing a mold sub-assembly.

Additional sub-assemblies may be assembled on base 56 and also sub-assemblies may be setup on additional base units, if desired. In this manner, a large number of optical elements or lenses may be molded at one time greatly increasing productive efficiency. In such an embodiment, a plurality of arms are attached or affixed to, or otherwise operatively associated with, the pressing hydraulic or pneumatic cylinder so as to contact each sub-assembly and exert a force thereon as described herein.

The base units are placed into a ULTRATEMP^{R} Inert Gas Oven, Model IGF-9980-4, manufactured by Blue M Electric Company of Blue Island, IL. The inert gas oven is modified to accommodate a support framework for the base units beneath a pressing rod connected to an external pneumatic cylinder. The pneumatic cylinder is Model #D-16-F-SM-UM manufactured by Bellowfram Co., SR2, Newel, W. Va. The oven is a forced gas circulation oven.

The oven is then closed and purged with N₂ gas for a period of about 40 min. at a flow of about 9.9-11.3 nm³/h (350-400 scfh). At the end of the oven purge, the N₂ flow is lowered to about 2.55-3.11 nm³/h (90-110 scfh) and maintained at that level to provide an inert gas atmosphere during subsequent processing. The oven is then heated to a temperature of about 375 °C. and maintained at that temperature by means of electrical heating elements.

After maintaining such temperature for about 100 minutes, the pneumatic cylinder is caused to contact the push rod; a pressure of 228 kPa (33 psi) being applied to the cylinder. The pressure is transmitted to the mold assembly and maintained for about 10 minutes.

After pressing is completed, the cylinder pressing rod is retracted and the oven set point controller temperature is lowered to about 25 °C. The oven damper is opened and external air circulation is started to allow free cooling. Such free cooling is continued for about 80 minutes, after which N₂ flow to the oven is stopped. The base units are then removed from the oven and glass optical elements or lenses 52 are removed from the sub-assemblies.

Glass optical elements 52 may then be annealed, if desired, by heating to 259 °C. at a rate of 2 C. degrees per minute; then heated to 329 °C. at a rate of 1.15 C. degrees per minute; holding temperature at 329 °C. for 5 minutes; then cooling to 225 °C. at a rate of 0.86 C. degrees per minute; then cooling to 20 °C. at a rate of 3.4 C. degrees per minute.

It has been found that forming the first and second glass molds in accordance with the present invention results in enormous economies and benefits for the following reasons. An ordinary metal mold has a typical expected life of about 300 cycles before it is attacked by the various chemicals involved, scratched, distorted, or otherwise made unsuitable for further precision molding. The life of the master of the present invention is approximately 80 cycles, but each glass mold formed from a master can thereafter be employed in approximately 100 molding cycles. It is seen, therefore, that employing the glass molds of the present invention to further mold glass optical elements in accordance with the present invention, of a 10 fold economy is realized. That is, for each master in accordance with the present invention, approximately 3000 glass optical elements can be produced in comparison to 300 such elements produced by employing prior art metal molds.

## Claims

1. A method of making, at least one first glass mold (30) usuable in the manufacture of a glass optical element having a first and second opposed surfaces defining an optical molding surface (26) for said optical element by
providing a master mold defining a master mold cavity adapted to form a glass mold,
disposing a quantity of glass mold material (10) within said master mold cavity,
molding a glass mold having a glass molding surface (26, 28) adapted to form an optical surface,
said glass molding surface at least in part defining a glass mold cavity having a predetermined desired size, shape and volume.

2. Method according to claim 1, further comprising the steps of
providing a second master defining a second master mold cavity adapted to form a second glass mold (38),
disposing a second quantity of glass mold material (40) within said second mold cavity, and
molding a second glass mold (38) having a second glass molding surface (46, 48) adapted to form a second optical surface,
said first and second glass molding surfaces in operative relationship defining a glass mold cavity having a predetermined desired size, shape and volume.

3. Method according to claims 1 or 2, wherein said first and second master molds are formed of metal, or
a glass ceramic, or
are formed of a composition consisting essentially on a weight percent basis of Si0₂ 42.7, Pb0 46.8, Ba0 2.5, Al₂0₃ 0.1, K₂0 5.4, and Na₂0 2.5.

4. Method according to claims 1, 2 or 3 wherein at least one of said quantities of glass mold material comprises a glass slug (10) which is substantially cylindrical in shape and having a bump (24) at one end thereof.

5. Method according to claims 1, 2 or 3 wherein said second quantity of glass mold material comprises a glass slug (40) which is substantially cylindrical in shape with a reduced diameter, having a protruding shoulder (42) at each end thereof along the cylindrical surface, and having a bump (50) at one end thereof.

6. Method according to claims 1, 2, 3, 4 or 5 wherein said first master mold comprises a snout portion (18) and a master ring (20) disposed thereabout.

7. The method of any of claims 1-6 further comprising the step of heating the first and second quantities of glass mold material to the softening temperature thereof.

8. A method of making a glass optical element comprising the steps of
disposing a first (60) and a second mold (70), made according to the methods of claims 1 and 2, in opposed cooperative relationship such that said first and second molding surfaces (62, 72) in part define a mold cavity having a predetermined volume,
disposing a predetermined quantity of optical element material (68) within said mold cavity, and
molding said optical element having first and second opposed optical surfaces (62, 72).

9. A method according to claim 2, further comprising the steps of
disposing said first (60) and second glass (70) molds in opposed cooperative relationship such that said first and second glass molding surfaces in part define a glass mold cavity having a predetermined volume,
disposing a predetermined quantity of glass optical element material within said class mold cavity, and
molding said glass optical element having first and second opposed optical surfaces.

10. The method of claim 1, 2, 8 or 9 wherein each said molding step further comprises applying a force to each assembly so formed.

11. The method of claim 1, 2, 8 or 9 wherein quantities of glass are heated in an oven, and molded in an inert gas atmosphere in said oven, e.g. in a nitrogen atmosphere.

12. The method of claim 11, further comprising the step of soaking said first and second quantities of said glass or glass mold material and said respective masters at the molding.

13. The method of claim 12 wherein each said molding step further comprises applying a force to each assembly so formed.

14. The method of claim 1, 2, 8 or 9 further comprising the step of annealing said glass molds or glass elements.

15. Method according to claim 14 wherein said quantity of mold material is heated by means of an RF induction field.

16. Method according to claim 8 or 9 further comprising the step of disposing an element ring (64) between said first (60) and second (70) glass molds whereby the outside diameter of said glass mold cavity is defined by the inside diameter of said ring.

17. The method of claim 8 or 9 further comprising the steps of
providing a constraining means, e.g., a sleeve (58), and
disposing said first (60) and second (70) glass molds in opposing operative relationship within said means.

18. The method of claim 1, 2, 8 or 9 wherein each said quantity of material comprises a sphere.

19. Apparatus for carrying the method according to any of claims 1-7 comprising
a constraining means (12),
a master molding member (14) comprising a snout portion (18) and a molding surface (16) on the snout portion disposed within said constraining means,
a master ring (20) having a precise predetermined thickness and interior diameter disposed about said snout such that only said molding surface of said snout and said ring are exposed within said contraining means, and
a means (32) for applying a force disposed within said constraining means in opposing cooperative relationship with said molding surface of said snout, the exposed surface of said master ring and the exposed portion of said snout defining a portion of a cavity adapted to receive a glass mold material preform.

20. Apparatus for carrying out the method according to claims 8 or 9 comprising
a molded first mold (60) formed of glass and having a first glass molding surface (62) adapted to form said first optical surface,
a second mold (70) having a second glass molding surface (72) adapted to form said second optical surface,
a ring (64) having a predetermined desired thickness and defining a central longitudinal aperture having a diameter corresponding to said predetermined diameter, and
constraining means (58) for holding said precision insert intermediate said first (60) and second (70) molds such that said first and second glass molding surfaces are disposed in an opposing cooperative molding relationship,
said ring and said first and second glass molding surfaces defining a mold cavity of predetermined volume.

21. Apparatus according to claim 20 further comprising means (74) for applying a force to said molds disposed in an operative relationship with said molds and said contraining means.

22. Apparatus according to claims 19, 20 or 21, wherein said constraining means is a hollow tubular sleeve member (58) closely surrounding said means for applying pressure on said molds and said master ring or ring.

23. Apparatus according to claim 20, wherein constraining means is a hollow tubular sleeve closely surrounding said molds and ring wherein said second mold is molded and formed of glass.

24. Apparatus according to claims 19 or 20, further comprising a means for heating of the assembly so formed, for instance an RF induction field or an oven within which the assembly thus formed is disposed.

25. Apparatus according to claims 19 or 20 wherein said master ring (20) or sleeve is formed of tungsten carbide, or glass ceramic, or stainless steel.

26. Apparatus according to claim 20, wherein said first and/or second mold is composed of, glass, glass-ceramic, or metal.

27. Apparatus according to claim 26, wherein said glass has a composition on an average weight percent basis of Si0₂ 42.7, Pb0 46.8, Ba0 2.5, Al₂0₃ 0.1, K₂0 5.4, and Na₂0 2.5.

28. Apparatus according to claims 19, 20, wherein said means for applying a force comprise a pneumatic or hydraulic cylinder.

29. Apparatus according to any one of claims 19-28, wherein at least the exposed surfaces of said master (14) and master ring (20) are coated with nickel.

30. Apparatus according to any one of claims 19-28, further comprising a push rod disposed intermediate said means to exert a force on the exposed surfaces of said master (14) and master ring (20).

## Patentansprüche

1. Verfahren zur Herstellung wenigstens einer ersten, zur Herstellung eines optischen Elements aus Glas mit ersten und zweiten, sich gegenüberliegenden Flächen geeigneten Glasform (30), die eine optische Formgebungsfläche (26) für das optische Element definiert, durch
Bereitstellen einer Masterform, die eine zur Bildung einer Glasform angepaßte Masterformvertiefung definiert,
Einfüllen einer Menge an Glasformmaterial (10) in die Masterformvertiefung,
Formung einer Glasform mit einer zur Bildung einer optischen Fläche angepaßten Glasformgebungsfläche (26, 28),
wobei die Glasformgebungsfläche wenigstens teilweise eine Glasformvertiefung mit einer vorbestimmten erwünschten Größe, Form und Volumen definiert.

2. Verfahren nach Anspruch 1, weiterhin umfassend die Schritte
Bereitstellen einer zweiten Masterform, das eine zur Formung einer zweiten Glasform (38) angepaßte zweite Masterformvertiefung definiert,
Einfüllen einer zweiten Menge an Glasformmaterial (40) in die zweite Formvertiefung, und
Formung einer zweiten Glasform (38) mit einer zur Bildung einer zweiten optischen Fläche angepaßten zweiten Glasformgebungsfläche (46, 48),
wobei die ersten und zweiten Glasformgebungsflächen funktionell ineinandergreifend eine Glasformvertiefung mit einer vorbestimmten Größe, Form und Volumen definieren.

3. Verfahren nach Anspruch 1 oder 2, wobei die ersten und zweiten Masterformen aus Metall oder einer Glaskeramik oder aus einer Zusammensetzung, bestehend im wesentlichen, ausgedrückt in Gew.-%, aus 42,7 SiO₂, 46,8 PbO, 2,5 BaO, 0,1 Al₂O₃, 5,4 K₂O und 2,5 Na₂O geformt sind.

4. Verfahren nach einem der Ansprüche 1, 2 oder 3, wobei wenigstens eine der Glasformmaterialmengen einen Glasformling (10) umfaßt, der im wesentlichen zylindrisch geformt ist und an seinem einen Ende einen Vorsprung (24) aufweist.

5. Verfahren nach einem der Ansprüche 1, 2 oder 3, wobei die zweite Menge an Glasformmaterial einen Glasformling (40) umfaßt, der im wesentlichen zylindrisch mit einem sich verjüngenden Durchmesser mit einer vorspringenden Schulter (42) an seinen beiden Enden entlang der zylindrischen Fläche und mit einem Vorsprung (50) an seinem einen Ende ausgebildet ist.

6. Verfahren nach einem der Ansprüche 1, 2, 3, 4 oder 5, wobei die erste Masterform einen Mundstückteil (18) und einen darüber angeordneten Masterring (20) aufweist.

7. Verfahren nach einem der Ansprüche 1 bis 6, weiterhin umfassend das Erhitzen der ersten und zweiten Mengen an Glasformmaterial bis zu ihrer Erweichungstemperatur.

8. Verfahren zur Herstellung eines optischen Elementes aus Glas mit den Schritten
Anordnen einer nach dem Verfahren der Ansprüche 1 und 2 hergestellten ersten (60) und einer zweiten (70) Form in sich gegenüberliegender, zusammenwirkender Weise, so daß die ersten und zweiten Formgebungsflächen (62, 72) teilweise eine Formvertiefung mit einem vorbestimmten Volumen definieren,
Einfüllen einer vorbestimmten Menge eines Materials (68) für ein optisches Element in die Formvertiefung, und
Formung des optischen Elements mit den ersten und zweiten, sich gegenüberliegenden optischen Flächen (62, 72).

9. Verfahren nach Anspruch 8, weiterhin umfassend
Anordnen der ersten (60) und zweiten (70) Glasformen in sich gegenüberliegender, zusammenwirkender Weise, so daß die ersten und zweiten Glasformgebungsflächen teilweise eine Glasformvertiefung mit einem vorbestimmten Volumen definieren,
Einfüllen einer vorbestimmten Menge eines Glasmaterials für ein optisches Element in die Glasformvertiefung, und
Formung des optischen Elements aus Glas mit ersten und zweiten, sich gegenüberliegenden optischen Flächen.

10. Verfahren nach Anspruch 1, 2, 8 oder 9, wobei jeder Formgebungsschritt weiterhin die Ausübung einer Kraft auf jede so gebildete Anordnung umfaßt.

11. Verfahren nach Anspruch 1, 2, 8 oder 9, wobei die Glasmengen in einem Ofen erhitzt und in einer inerten Gasatmosphäre, z.B. in einer Stickstoffatmosphäre, im Ofen geformt werden.

12. Verfahren nach Anspruch 11, weiterhin umfassend das Garbrennen (soaking) der ersten und zweiten Mengen des Glases oder des Glasformmaterials und der jeweiligen Master bei der Formgebung.

13. Verfahren nach Anspruch 12, wobei jeder Formgebungsschritt weiterhin das Ausüben einer Kraft auf jede so gebildete Anordnung umfaßt.

14. Verfahren nach Anspruch 1, 2, 8 oder 9, weiterhin umfassend die Kühlung der Glasformen oder Glaselemente.

15. Verfahren nach Anspruch 14, wobei die Menge des Formmaterials durch ein Hochfrequenz-Induktionsfeld erhitzt wird.

16. Verfahren nach Anspruch 8 oder 9, weiterhin umfassend das Anordnen eines Elementrings (64) zwischen den ersten (60) und zweiten (70) Glasformen, wodurch der Außendurchmesser der Glasformvertiefung vom Innendurchmesser des Rings definiert wird.

17. Verfahren nach Anspruch 8 oder 9, weiterhin umfassend das
Bereitstellen einer Einspanneinrichtung, z.B. einer Hülse (58), und
das Einführen erster (60) und zweiter (70) Glasformen in sich gegenüberliegender, zusammenwirkender Weise in die Einrichtung.

18. Verfahren nach Anspruch 1, 2, 8 oder 9, wobei jede Materialmenge eine Kugel umfaßt.

19. Vorrichtung zur Durchführung des Verfahrens nach einem der Ansprüche 1 bis 7, umfassend
eine Einspanneinrichtung (12),
ein Masterformgebungselement (14) mit einem Mundstück (18) und einer Formgebungsfläche (16) auf dem Mundstückteil, das in der Einspanneinrichtung angeordnet ist,
einen um das Mundstück angeordneten Masterring (20) mit einer genau vorbestimmten Dicke und einem genau vorbestimmten Innendurchmesser, so daß nur die Formgebungsfläche des Mundstücks und der Ring in der Einspanneinrichtung freiliegen, und
eine Einrichtung (32) zur Ausübung von Druck, die in der Einspanneinrichtung in sich gegenüberliegender, mit der Formgebungsfläche des Mundstücks zusammenwirkender Weise angeordnet ist, wobei die freiliegende Fläche des Masterrings und der freiliegende Teil des Mundstücks einen Teil einer Vertiefung definieren, die zur Aufnahme einer Glasformmaterial-Vorform angepaßt ist.

20. Vorrichtung zur Ausführung des Verfahrens nach einem der Ansprüche 8 oder 9, umfassend eine aus Glas gebildete erste geformte Form (60) mit einer ersten Glasformgebungsfläche (62), die zur Bildung der ersten optischen Fläche angepaßt ist,
eine zweite Form (70) mit einer zweiten Glasformgebungsfläche (72), die zur Bildung der zweiten optischen Fläche angepaßt ist,
einen Ring (64) mit einer vorbestimmten erwünschten Dicke, wobei der Ring eine zentrale, in Längsrichtung angeordnete Öffnung mit einem dem vorbestimmten Durchmesser entsprechenden Durchmesser definiert, und
eine Einspanneinrichtung (58), um den Präzisionseinsatz zwischen den ersten (60) und zweiten (70) Formen zu halten, so daß die ersten und zweiten Glasformgebungsflächen in sich gegenüberliegender, zusammenwirkender Weise zur Formgebung angeordnet sind,
wobei der Ring und die ersten und zweiten Glasformgebungsflächen eine Formvertiefung mit einem vorbestimmten Volumen definieren.

21. Vorrichtung nach Anspruch 20, die weiterhin eine Einrichtung (74) zum Ausüben einer Kraft auf die Formen umfaßt, die in funktioneller Beziehung mit den Formen und mit der Einspanneinrichtung angeordnet ist.

22. Vorrichtung nach einem der Ansprüche 19, 20 oder 21, wobei die Einspanneinrichtung ein hohles rohrförmiges Hülsenelement (58) ist, das die Einrichtung zur Ausübung von Druck auf die Formen und den Masterring oder den Ring enganliegend umgibt.

23. Vorrichtung nach Anspruch 20, wobei die Einspanneinrichtung eine hohle röhrenförmige Hülse ist, die die Formen und den Ring enganliegend umgibt, wobei die zweite Form aus Glas geformt und gebildet ist.

24. Vorrichtung nach einem der Ansprüche 19 oder 20, weiterhin umfassend eine Einrichtung zur Erhitzung des so gebildeten Aufbaus, beispielsweise ein Hochfrequenz-Induktionsfeld oder einen Ofen, in dem die so gebildete Anordnung angeordnet ist.

25. Vorrichtung nach einem der Ansprüche 19 oder 20, wobei der Masterring (20) oder die Hülse aus Wolframcarbid oder Glaskeramik oder Edelstahl gebildet ist.

26. Vorrichtung nach Anspruch 20, wobei die erste und/oder zweite Form aus Glas, Glaskeramik oder Metall zusammengesetzt ist.

27. Vorrichtung nach Anspruch 26, wobei das Glas eine Zusammensetzung, bezogen auf ein Gewichtsprozentmittel, aus 42,7 SiO₂, 46,8 PbO, 2,5 BaO, 0,1 Al₂O₃, 5,4 K₂O und 2,5 Na₂O aufweist.

28. Vorrichtung nach einem der Ansprüche 19 oder 20, wobei die Einrichtung zur Kraftausübung einen pneumatischen oder hydraulischen Zylinder aufweist.

29. Vorrichtung nach einem der Ansprüche 19 bis 28, wobei wenigstens eine der freiliegenden Flächen des Masters (14) und Masterrings (20) mit Nickel beschichtet ist.

30. Vorrichtung nach einem der Ansprüche 19 bis 28, weiterhin umfassend ein zwischen der Einrichtung zur Ausübung einer Kraft auf die freiliegenden Flächen des Masters (14) und Masterrings (20) angeordnete Preßstange.

## Revendications

1. Un procédé de fabrication d'au moins un premier moule en verre (30) utilisable dans la fabrication d'un élément optique en verre ayant des première et seconde surface opposées, définissant une surface de moulage optique (26) pour ledit élément optique, consistant à
préparer un moule maître définissant une cavité de moule maître convenant pour former un moule en verre,
placer une certaine quantité de matière de moule en verre (10) dans ladite cavité de moule maître,
mouler un moule en verre ayant une surface de moulage en verre (26, 28) convenant pour former une surface optique,
ladite surface de moulage en verre définissant, au moins en partie, une cavité de moule en verre ayant une taille, une forme et un volume souhaités prédéterminés.

2. Procédé selon la revendication 1, comprenant de plus les étapes suivantes
former un second maître définissant une seconde cavité de moule maître convenant pour former un second moule en verre (38),
placer une seconde quantité de matière de moule en verre (40) dans ladite seconde cavité de moule, et
mouler un second moule en verre (38) ayant une seconde surface de moulage en verre (46, 48) convenant pour former une seconde surface optique,
lesdites première et seconde surfaces de moulage en verre en relation opératoire définissant une cavité de moule en verre ayant une taille, une forme et un volume souhaités prédéterminés.

3. Procédé selon la revendication 1 ou 2, dans lequel lesdits premier et second moules maîtres sont formés de métal ou d'une matière vitrocéramique, ou sont formés d'une composition constituée essentiellement, en pourcentages en poids, de 42,7 SiO₂, 46,8 PbO, 2,5 BaO, 0,1 Al₂O₃, 5,4 K₂O et 2,5 Na₂O.

4. Procédé selon la revendication 1, 2 ou 3, dans lequel au moins l'une desdites quantités de matière de moule en verre comprend un bloc de verre (10) qui est de forme sensiblement cylindrique et présente un renflement (24) à l'une de ses extrémités.

5. Procédé selon la revendication 1, 2 ou 3, dans lequel ladite seconde quantité de matière de moule en verre comprend un bloc de verre (40) qui est de forme sensiblement cylindrique avec un diamètre réduit, ayant un épaulement en saillie (42) à chacune de ses extrémités le long de la surface cylindrique, et ayant un renflement (50) à l'une de ses extrémités.

6. Procédé selon la revendication 1, 2, 3, 4 ou 5, dans lequel ledit premier moule maître comprend un poinçon (18) et un anneau maître (20) disposé autour.

7. Le procédé de l'une quelconque des revendications 1 à 6, comprenant de plus l'étape consistant à chauffer les première et seconde quantités de matière de moule en verre jusqu'à leur température de ramollissement.

8. Un procédé de fabrication d'un élément optique en verre comprenant les étapes suivantes
disposer un premier (60) et un second (70) moules fabriqués selon les procédés des revendications 1 et 2 en relation de coopération antagoniste de telle manière que lesdites première et seconde surfaces de moulage (62, 72) définissent en partie une cavité de moule ayant un volume prédéterminé,
placer une quantité prédéterminée de matière d'élément optique (68) dans ladite cavité de moule, et
mouler ledit élément optique ayant des première et seconde surfaces optiques opposées.

9. Un procédé selon la revendication 2, comprenant de plus les étapes suivantes
disposer les premier (60) et second (70) moules en verre en relation de coopération antagoniste de telle manière que lesdites première et seconde surfaces de moulage en verre définissent en partie une cavité de moule en verre ayant un volume prédéterminé,
placer une quantité prédéterminée de matière d'élément optique en verre dans ladite cavité de moule en verre, et
mouler ledit élément optique en verre ayant des première et seconde surfaces optiques opposées.

10. Le procédé de la revendication 1, 2, 8 ou 9, dans lequel chaque étape de moulage comprend de plus l'application d'une force à chaque assemblage ainsi formé.

11. Le procédé de la revendication 1, 2, 8 ou 9, dans lequel des quantités de verre sont chauffées dans un four et moulées dans une atmosphère de gaz inerte dans ledit four, par exemple dans une atmosphère d'azote.

12. Le procédé de la revendication 11, comprenant de plus l'étape consistant à chauffer uniformément lesdites première et second quantités dudit verre ou de ladite matière de moule en verre et lesdits maîtres respectifs au moment du moulage.

13. Le procédé de la revendication 12, dans lequel chaque étape de moulage comprend de plus l'application d'une force à chaque assemblage ainsi formé.

14. Le procédé de la revendication 1, 2, 8 ou 9, comprenant de plus l'étape consistant à recuire desdits moules en verre ou éléments en verre.

15. Procédé selon la revendication 14, dans lequel ladite quantité de matière de moule est chauffée au moyen d'un champ d'induction à haute fréquence.

16. Procédé selon la revendication 8 ou 9, comprenant de plus l'étape consistant à placer un élément annulaire (64) entre lesdits premier (60) et second (70) moules en verre, si bien que le diamètre externe de ladite cavité de moule en verre soit définie par le diamètre interne dudit anneau.

17. Le procédé de la revendication 8 ou 9, comprenant de plus les étapes suivantes
fournir un moyen de contention, par exemple un fourreau (58), et
disposer lesdits premier (60) et second (70) moules en verre en relation opératoire antagoniste à l'intérieur dudit moyen.

18. Le procédé de la revendication 1, 2, 8 ou 9, dans lequel chacune desdites quantités de matière comprend une sphère.

19. Appareil pour la mise en oeuvre du procédé selon l'une quelconque des revendications 1 à 7, comprenant
un moyen de contention (12),
un élément maître de moulage (14) comprenant un poinçon (18) et une surface de moulage (16) sur le poinçon, disposé à l'intérieur dudit moyen de contention,
un anneau maître (20) ayant une épaisseur et un diamètre interne précis prédéterminés disposé autour dudit poinçon de telle manière que seule ladite surface de moulage dudit poinçon et ledit anneau soient exposés à l'intérieur dudit moyen de contention, et
un moyen (32) pour appliquer une force, disposé dans ledit moyen de contention en relation de coopération antagoniste avec ladite surface de moulage dudit poinçon, la surface exposée dudit anneau maître et la portion exposée dudit poinçon définissant une partie d'une cavité convenant pour recevoir une préforme de matière de moule en verre.

20. Appareil pour la mise en oeuvre du procédé selon les revendications 8 ou 9, comprenant
un premier moule moulé (60) constitué de verre et ayant une première surface de moulage en verre (62) convenant pour former ladite première surface optique,
un second moule (70) ayant une seconde surface de moulage en verre (72) convenant pour former ladite seconde surface optique,
un anneau (64) ayant une épaisseur désirée prédéterminée et définissant une ouverture centrale longitudinale ayant un diamètre correspondant audit diamètre prédéterminé, et
un moyen de contention (58) pour maintenir ledit anneau de précision entre lesdits premier (60) et second (70) moules de telle manière que lesdites première et seconde surfaces de moulage en verre soient disposées en relation de coopération antagoniste pour le moulage,
ledit anneau et lesdites première et seconde surfaces de moulage en verre définissant une cavité de moule de volume prédéterminé.

21. Appareil selon la revendication 20, comprenant de plus un moyen (74) pour appliquer une force auxdits moules disposés en relation opératoire avec lesdits moules et ledit moyen de contention.

22. Appareil selon les revendications 19, 20 ou 21, dans lequel ledit moyen de contention est un fourreau tubulaire creux (58) entourant étroitement ledit moyen pour appliquer une pression sur lesdits moules et ledit anneau maître ou anneau.

23. Appareil selon la revendication 20, dans lequel le moyen de contention est un fourreau tubulaire creux entourant étroitement lesdits moules et l'anneau, dans lesquels ledit second moule est moulé et formé de verre.

24. Appareil selon la revendication 19 ou 20, comprenant de plus un moyen pour chauffer l'assemblage ainsi formé, par exemple un champ d'induction à haute fréquence ou un four dans lequel est placé l'assemblage ainsi formé.

25. Appareil selon la revendication 19 ou 20, dans lequel ledit anneau maître (20) ou fourreau est constitué de carbure de tungstène, de matière vitrocéramique ou d'acier inoxydable.

26. Appareil selon la revendication 20, dans lequel lesdits premier et/ou second moules sont constitués de verre, de matière vitrocéramique ou de métal.

27. Appareil selon la revendication 26, dans lequel ledit verre a une composition, exprimée en pourcentages moyens en poids, 42,7 SiO₂, 46,8 PbO, 2,5 BaO, 0,1 Al₂O₃, 5,4 K₂O et 2,5 Na₂O.

28. Appareil selon les revendications 19, 20, dans lequel ledit moyen pour appliquer une force comprend un cylindre pneumatique ou hydraulique.

29. Appareil selon l'une quelconque des revendications 19 à 28, dans lequel au moins les surfaces exposées dudit maître (14) et dudit anneau maître (20) sont revêtues de nickel.

30. Appareil selon l'une quelconque des revendications 19 à 28, comprenant de plus une tige-poussoir disposée comme intermédiaire dudit moyen pour exercer une force sur les surfaces exposées dudit maître (14) et dudit anneau maître (20).
